# EUROPEAN PATENT APPLICATION

(11) **EP 1 553 149 A1**
(43) Date of publication of application: **13.07.2005**
(21) Application number: 03104998.4
(22) Date of filing: 31.12.2003
(51) Int. Cl.: C09J 153/02, C08F 297/04, C08L 53/02

(54) **Low viscosity, hot-melt stable adhesive compositions**

(71) Applicant: Kraton Polymers Research B.V., 1030 BH Amsterdam (NL)
(72) Inventor: De Keyzer, Noel Raymond Maurice, B-1348, Ottignies - Louvain-La-Neuve (BE); Southwick, Jeffrey George, Houston, TX 77094 (US); Van Dijk, Cornelis Martinus, NL-1031 CM, Amsterdam (NL)
(74) Representative: Kortekaas, Marcellinus C. J. A.

(57) **Abstract**

Low viscosity, hot-melt stable adhesive composition, comprising:
a) at least one block copolymer, compr ising at least two terminal poly(vinyl aromatic) blocks and at least one central block of randomly copolymerized isoprene/butadiene mixtures in an isoprene/butadiene weight ratio of from 40/60 to 60/40, having a poly(vinyl aromatic) content in the range of from 17 to 20 % a total apparent molecular weightn the range of from 175,000 to 195,000a content of1,2-vinyl bonds and/or 3,4 vinyl bonds of at most 15wt% in the conjugated diene blocks , and a coupling efficiency in the range of from 63 -87 %, occurring in a weight proportion of from 40 to 45 wt%, relative to the weight of the complete composition,
b) an aliphatic/aromatic hydrocarbon tackifying resin, containing lessthan 16 % by weight of aromatic structure as determined by H -NMR, a differential scanning calorimetry (DSC) glass transition temperature (Tg) between 30 and 55 °C, and a Ring and Ball softening point between 85 and 95 °C, and occurring in a weight proportion of from 45 to 55 wt%, relative to the weight of the complete composition,
c) a plasticizer, in a weight proportion of from 5 to 15 wt%, relativeto the weight of the complete composition,
and adhesive tapes and labels, comprising said composition.

## Description

### Technical field

The present invention relates to low viscosity, hot-melt stable adhesive compositions, to specific block copolymers to be used therein, and to tapes and labels comprising said compositions.

### Background art

Low viscosity, hot-melt stable adhesive compositions are aimed at for a long time.

An important disadvantage of the prior hot-melt adhesive compositions, comprising a (S-I)ₙX, S-I-S, (SB)ₙX or S-B-S block copolymer, wherein S represents a poly(styrene) block and wherein I represents a predominantly poly(isoprene) block and wherein B represents a predominantly poly(butadiene) block, is that the hot-melt viscosity is not stable, but changes significantly during processing at the melt temperatures.

More in particular, the hot-melt viscosity of adhesive compositions, comprising block copolymers, containing at least one poly(butadiene) block is known to increase during processing of the melt, due to crosslinking, whereas the melt viscosity of adhesive compositions, comprising block copolymers, containing at least one predominantly poly(isoprene) block is known to decrease during processing of the melt due to chain scission.

For example, from EP 0659787 A (SHELL) 28.06.1995 high shear strength pressure sensitive hot-melt compositions were known, comprising (a) one or more linear block copolymers, comprising two terminal blocks of predominantly a monovinyl aromatic compound and one block of predominantly a conjugated diene, characterized by a monovinyl aromatic content in the range of from 15 to 25 %, a total apparent molecular weight in the range of from 130,000 to 180,000 and a true molecular weight in the range of from 10,000 to 14,000, optionally mixed with minor amounts of diblock copolymer, which comprises blocks similar to those of the triblock copolymer component, (b) a compatible primary tackifying resin, (c) a plasticizing oil and/or secondary tackifying resin, and (d) a stabilizer.

Preferred tackifying resins, used in these compositions were selected from mixed aromatic and aliphatic petroleum hydrocarbon resins wherein the aliphatic hydrocarbon represented more than 50 wt% of the total resins.

Said compositions were said to be preferably used for packaging tapes.

However, said formulations have been found to show poor hot-melt stability, i.e. the viscosity decreased on prolonged heating during processing.

From WO 9516755 A (EXXON) 22.06.1995, low melt viscosity hot-melt pressure sensitive adhesive compositions were known, which showed enhanced tack properties.

Said compositions were based on a S-I-S block copolymer, having poly(styrene) and poly(isoprene) block segments, blended with a petroleum tackifier resin which was a Friedel-Crafts polymerization product of (i) a cracked petroleum feed containing C5 olefins and diolefins or a mixture of C5 and C6 olefins and diolefins, copolymerized with (i,i) from about 5 to 15 wt% of a monovinyl aromatic monomer, having 8 or 9 carbon atoms such as styrene.

Said compositions also comprised a poly(styrene)-poly(isoprene) diblock copolymer and processing oil.

However, said compositions have been found to show poor hot-melt stability, i.e. the viscosity decreased on prolonged heating during processing.

From DE 2942128 A (BASF) 30.04.1981, the use of S(IB)S block copolymers in adhesives was known. Said block copolymers had an apparent total molecular weight in the range of from 30,000 to 300,000, contained poly(styrene) blocks having a true molecular weight in the range of from 5,000 to 50,000 and preferably from 15,000 to 25,000 and showed a poly(styrene) content in the range of from 10 to 50 wt%. Preferred molecular weights of the conjugated block was preferably in the range of from 60,000 to 100,000.

Said patent application did not provide any information enabling to reach hot-melt adhesive compositions, showing improved acceptable hot-melt stability in combination with acceptable adhesive properties of the final products, e.g. tapes and labels, as presently required by modern industry.

From WO 02057386 A (KRATON) 25.07.2002 adhesive compositions were known comprising (i) one or more styrenic block copolymers, (i,i) a tackifier resin, and (i,i,i) one or more plasticizers, wherein the block copolymers had the general formula A-C-A (1) or (A-C)ₙX (2), wherein each A independently was a polymer block of en aromatic vinyl compound, and C was a mixed polymer block (B/I) of butadiene (B) and isoprene (I) in a weight ratio B:I in the range of 30:70 to 70:30, and said polymer block C had a glass transition temperature (Tg) of at most -50°C (determined according to ASTM-E-1 3 5-98), wherein n was an integer equal to or greater than 2 and X was the residue of a coupling agent, and wherein the tackifier resin had an aromaticity (in relative percentage of aromatic protons as determined by H-NMR) in the range of from 3 to 18 %.

However, not any teaching can be found in said application enabling to reach hot-melt adhesive compositions, showing improved acceptable hot-melt stability in combination with acceptable adhesive properties of the final products, e.g. tapes and labels, and more in particular packaging tapes, as presently required by modern industry.

It will be appreciated that an object of the present invention is to provide hot-melt adhesive compositions showing an acceptable hot-melt stability, i.e. having a viscosity varying less than 5% below or over its initial value after 24 hoursat 177°C and having a hot-melt viscosity ≤ 80 Pa.s at 177°C, and in combination with acceptable adhesive properties of the final products.

Another object of the present invention is formed by block copolymers which have a specific fine-tuned microstructure, enabling the hereinbefore specified desired properties of the hot-melt adhesive compositions, in which they are included.

Still another object of the present invention is formed by tapes and labels, derived from said hot-melt compositions and more in particular packaging tapes.

As result of extensive research and experimentation said block copolymers and hot-melt adhesive compositions aimed at, have surprisingly been found.

### Disclosure of the Invention

Accordingly, a low viscosity, hot-melt stable adhesive composition is provided, comprising:
a) at least one block copolymer, comprising at least two terminal poly(vinyl aromatic) blocks and at least one central block of randomly copolymerized isoprene/butadiene mixtures in an isoprene/butadiene weight ratio of from 40/60 to 60/40, having a poly(vinyl aromatic) content in the range of from 17 to 20 %, a total apparent molecular weight in the range of from 175,000 to 195,000, a content of 1,2-vinyl bonds and/or 3,4 vinyl bonds of at most 15 wt% in the conjugated diene blocks , and a coupling efficiency in the range of from 63-80 %, and occurring in a weight proportion of from 40 to 45 wt%, relative to the weight of the complete composition,
b) an aliphatic/aromatic hydrocarbon tackifying resin, containing less than 16 % by weight of aromatic structure as determined by H-NMR, a differential scanning calorimetry (DSC) glass transition temperature (Tg) between 30 and 55°C, and a Ring and Ball softening point between 85 and 95°C, in a weight proportion of from 45 to 55 wt%, relative to the weight of the complete composition,
c) a plasticizer, in a weight proportion of from 5 to 15 wt%, relative to the weight of the complete composition;
and having a stable hot-melt viscosity of plus or minus 5 % of the starting value after 24 hoursat 177°C and having a hot-melt viscosity of ≤ 80 Pa.s at 177°C.

Moreover, the invention also relates to tapes and labels, comprising the hereinbefore specified low viscosity hot-melt stable adhesive composition on a carrier, and the block copolymers to be included in said composition as component (a).

### Mode(s) for carrying out the invention

### Component (a)

The main block copolymer component used in the adhesive composition is a block copolymer, having a structure represented by the general formulae S-(I/B)-S (1) or [S-(I/B)]ₙX (2), optionally mixed with a diblock copolymer S-(I/B), and optionally mixed with minor amounts of one or more block copolymers, selected from the group S-B, S-B-S, S-I and S-I-S, wherein S represents a poly(vinyl aromatic compound) block, (I/B) represents a block of a randomly copolymerized mixture of isoprene and butadiene, wherein the weight ratio between isoprene and butadiene is in the range of from 40:60 to 60:40, or in a mole/mole ratio of from 0.57/1.1 to 0.85/0.74, wherein B represents a poly(butadiene) block, wherein I represents a poly(isoprene) block, wherein n is an integer equal to or greater than 2, and wherein X is the residue of a coupling agent.

Preferred weight ratios between isoprene and butadiene are in the range of from 45:55 to 55:45 or in a molar ratio of from 0.66/1.01 to 0.80/0.83 mole/mole.

As an example of the aromatic vinyl compound useful in the practice of the present invention, may be mentioned styrene, alpha-methylstyrene, p-methylstyrene, o-methylstyrene, p-tert.butylstyrene, dimethylstyrene, and vinyl naphthalene or mixtures thereof. Of these, styrene is particularly preferred from the viewpoints of easy availability, reactivity, physical properties of the resulting block copolymers. The A polymer block may contain minor amounts of comonomers other than an aromatic vinyl compound, e.g., up to 5 wt% of a copolymerizable monomer such as butadiene and/or isoprene (based on the weight of the total block). Most preferred are A blocks derived from substantially pure styrene.

These polymer blocks A preferably have a true molecular weight in the range from 10,000 to 11,000.

The mixed polymer midblock (I/B) is made of butadiene and isoprene as copolymerizing monomers, although it too may contain minor amounts of other comonomers, e.g. up to 5 wt% of a copolymerizable monomer such as styrene (based on the weight of the total block), but mixtures of substantially pure isoprene and butadiene are preferred.

In the block copolymers according to the present invention, the proportion of bound aromatic vinyl compound is in the range of 17-20 wt%, based on the total block copolymer. Preferred proportions of bound butadiene and bound isoprene are in the range of from 32-42 wt% and more preferably in the range of from 38 to 42 wt%. These amounts of bound monomers (plus copolymerizable monomers, if any) add up to 100 wt%.

Preferred block copolymers have a coupling efficiency of from 64 to 80.

The block copolymers to be applied in the adhesive compositions according to the present invention each preferably have a weight average molecular weight (apparent Mw, i.e., expressed in terms of polystyrene) ranging from 180,000 to 190,000, as determined by gel permeation chromatography (GPC, relative to poly(styrene) calibration standards, according to ASTM 3536).

The block copolymers to be applied in the adhesive compositions according to the present invention each preferablycontain 1,2-vinyl bonds and/or 3,4-vinyl bonds in a proportion in the range of from 5 to 15 wt% based on the weig ht of the conjugated diene or in the range of from 0.08 to 0.70 mole/mole%, and preferably from 5 to 10 wt%, based on the weight of conjugated diene or 0.08 to 0.35 mole/mole%. The block copolymers according to the present invention preferably each have a storage modulus (G') of 1 to 300 MPa in a visco-elasticity measurement in a temperature range of from 0 to 50 °C, and only one peak on loss tangent (tan d) attributable to the mixed butadiene/isoprene polymer block at a temperature of °C or below. When a block copolymer having a storage modulus (G') lower than 1 MPa is used as a base polymer for a pressure sensitive adhesive, then the holding power of the PSA is lowered. On the other hand, any storage modulus exceeding 300 MPa results in a pressure sensitive adhesive lowered in tackiness.

Said block copolymers to be applied as main component (a) in the adhesive composition, have a randomly copolymerized block (I/B), which means that the mixed midblock shows no significant single homopolymer block formation. They can be prepared as described WO 02057386 (KRATON) 25.07.2002 25.07.2002, which is herein incorporated by references.

More in particular, polymers having mixed midblocks may be defined as having average homopolymer block lengths of less than 100 monomer units, preferably less than 50 monomer units, more preferably less than 20 monomer units. Average homopolymer block length may be determined by carbon-13 NMR, as described in detailn WO 02057386 (KRATON) 25.07.2002.

The block copolymers according to the present invention may be prepared by any method in the art, including the well known full sequential polymerization method optionally in combination with re- initiation, and the coupling method, as illustrated in e.g. US 3231635 (SHELL) 25.01.1966 US 3251905 (PHILIPS PETROLEUM) 17.05.1966 US 3390207 (SHELL) 25.06.1968US 3598887 (POLYMER CORP) 0.08.1971 US 4219627 (FIRESTONE) 26.08.1980 and EP 0413294 A (DOW) 20.02.1991EP 0387671 A (DOW) 19.09.1990 EP 0636654 A (SHELL) 01.02.1995 and WO 9422931 (SHELL) 11.04.1995

Preferably the block copolymers according to the present invention are prepared by coupling living diblock copolymer prepared by anionic polymerization with a coupling agent.

Preferred coupling agents are EPON™ 825 or 826 (diglycidyl ethers), dibromobenzene, tetramethoxysilane or other tetra(alkoxy)silanes.

The main block copolymer in component (a) may hence comprise a mixture of the coupled polymer according to the general formulae (1) or (2) and of the intermediate diblock, e.g. in a molar ratio from 60/40 to 75/25 and preferably from 65/35 to 75/25.

It will be appreciated that the main block copolymer component (a) may also be obtained by sequential polymerization of batches of the respective monomers (styrene and a mixture of butadiene/isoprene) in combination with reinitiation.

The block copolymers of formulae (1) and (2) can bemade by mere adaptation of common processes used for the preparation of S-B-S type block copolymers and/or S-I-S type block copolymers, using a mixture of butadiene/isoprene instead. Of importance in the preparation of the block copolymers according to the present invention is to avoid homopolymer block formation, to ensure appropriate B/I ratio, and to produce a polymer block wherein the random midblock has a Tg of -60°C or less. Generally no randomizer will be used.

As specified hereinbefore, the main block copolymer of formulae (1) and (2) usually will comprise corresponding diblocks in a molar ratio of from 20 to 40 % and preferably from 25 to 35 %.

### Component (b)

Suitable tackifying resins or mixtures of resins have been found to have an aromatic H-NMR content less than 16 % and preferably from 4 to 10 %, a differential scanning calorimetry (DSC) glass transition temperature Tg between 30°C and 55°C, and preferably between 35 and 50°C, and a Ring and Ball softening point between 85°C and 95°C.

They can be selected from modified aliphatic hydrocarbon resins such as modified C5 hydrocarbon resins (C5/C9 resins), styrenated terpene resins, partially hydrogenated C9 hydrocarbon resins and mixtures thereof. The aromatic component may be a feedstream composed by one or more of the following chemicals like polystyrene, alpha-methyl styrene, vinyl toluene, alkyl substituted indenes and related homologues.

More preferred examples of resins to be used as component (b) are: WINGTACK™ ET, a modified aliphatic hydrocarbon resin with H-NMR aromatic content of 4.2 %, a Ring and Ball softening point of 94°C, QUINTONE™ S-100, a modified aliphatic hydrocarbon resirwith a H-NMR aromatic content of 6.3 % and a Ring and Ball softening point of 94°, PICCOTAC™ 8095, an aliphatic hydrocarbon resin with a H-NMR aromatic content of 5.4 % and a Ring and Ball softening point of 93°C, WINGTACK™ 86, a modified aliphatic hydrocarbon resin with a H-NMR aromatic content of 9.6% and a Ring and Ball softening point of 86°C.

Preferred solid tackifying resins will have Ring and Ball softening points in the range of from 85 to 95°C.

Those resins are manufactured by GOODYEAR CHEMICALS, ZEON, and EASTMAN CHEMICALS.

The adhesive composition according to the present invention preferably comprises from 50 to 300 parts by weight and more preferably from 100 to 200 parts by weight of tackifying resin per 100 partsby weight of component (a).

In preferred adhesive compositions, the component (b) occurs in a proportion of from 48 to 55 wt%, relative to the weight of the composition.

### Component (c)

Suitable plasticizers include predominantly plasticizing oils that are paraffinic or naphthenic in character (carbon aromatic distribution ≤ 5%, preferably ≤ 2%, more preferably 0% as determined according to DIN 51378) and a glass transition temperature lower than -55°C as measured by Differential Scanning Calorimetry. Those products are commercially available from the Royal Dutch/Shell Group of companies, like SHELLFLEX™, CATENEX™, and ONDINA™ oils. Other oils include KAYDOL™ oil from Witco, or TUFFLO™ oils from Arco or NYPLAST™ from NYNAS. Other plasticizers include compatible liquid tackifying resins like REGALREZ™ R-1018 or WINGTACK™ 10.

Other plasticizers may also be added, like olefin oligomers; low molecular weight polymers (≤ 30,000 g/mol) like liquid polybutene, liquid polyisoprene copolymers, liquid styrene/isoprene copolymers or liquid hydrogenated styrene/conjugated diene copolymers; vegetable oils and their derivatives; or paraffin and microcrystalline waxes.

The composition according to the present invention preferably comprises a plasticizer in a weight proportion of from 5 to 15 wt%, relative to the weight of the complete composition and of from 10 to 85 parts by weight of plasticizer per 100 parts by weight of block copolymer constituent (a). Also the or each block copolymer of component (a) may be pre-blended with a small amount of plasticizer by the manufacturer of said copolymer.

### Other components (non-limitative)

Other rubber components may be incorporated into the adhesive compositions according to the present invention. It is also known in the art that various other components can be added to modify the tack, the odor, the color of the adhesives. Antioxidants and other stabilizing ingredients can also be added to protect the adhesive from degradation induced by heat, light and processing or during storage.

Several types of antioxidants can be used, either primary antioxidants like hindered phenols or secondary antioxidants like phosphite derivatives or blends thereof. Examples of commercially available antioxidants are IRGANOX™ 565 from Ciba-Geigy (2.4-bis-(n-octylthio)-6-(4-hydroxy-3,5-di-tertiary-butyl anilino)-1 , 3, 5-triazine), IRGANOX™ 1010 from Ciba Geigy (tetrakis-ethylene-(3,5-di-tertiary-butyl-4-hydroxyhydrocinnamate)methane) and POLYGARD™ HR from Uniroyal (tris-(2,4-di-tertiary-butyl-phenyl)phosphite). Other antioxidants developed to protect the gelling of the polybutadiene segments can also be use, like the SUMILIZER™ GS from Sumitomo (2[1-(2-hydroxy-3,5-di-ter-pentylphenyl)ethyl)]-4,6-di-tert-pentylphenylacrylate); SUMILIZER™ T-PD from Sumitomo (pentaerythrythyltetrakis(3-dodecylthiopropionate)); or mixtures thereof.

### Preparation of the composition

No particular limitation is imposed on the preparation process of the adhesive composition. Therefore, there may be used any process such as a mechanically mixing process making use of rolls, a Banbury mixer or a Dalton kneader, a hot-melt process characterized in that heating and mixing are conducted by using a melting kettle equipped with a stirrer, like a high shear Z-blade mixer or a single- or twin-screw extruder, or a solvent process in which the compounding components are poured in a suitable solvent and stirred, thereby obtaining an intimate solution of the pressure sensitive adhesive composition.

### Use of the composition

Pressure Sensitive Adhesive (PSA) compositions according to the present invention may be applied as hot-melt to a base material such as paper or a plastic film by means of a proper coater, thereby producing various kinds of pressure sensitive adhesive tapes and more in particular packaging tapes.

The PSA compositions according to the present invention are particularly suited to be used in packaging tapes as cardboard box closure tapes for industrial and domestic use, masking tapes and office tapes.

During label manufacture, a laminate of a face stock, pressure sensitive adhesive layer and a release liner are passed through an apparatus which converts the laminate into commercially useful labels and label stock. The process involves, amongst others, die-cutting and matrix stripping to leave labels on a release liner.

It has surprisingly been found that during the manufacture of tapes, labels and bandages according to the present invention, the fouling of knives used in slitting and cutting of roll and sheet stocks is significantly reduced.

It will be appreciated that another aspect of the present invention is formed by the use of tapes, labels or bandages.

The present invention will hereinafter be illustrated more specifically by the following examples, however without restricting the scope to these specific embodiments.

### Test methods

Standard tack, cohesion and viscosity tests were carried out on these formulations as described in the Test method manual for Pressure Sensitive Tapes from the Pressure Sensitive Tape Council (PSTC), the standard FINAT test method for Pressure sensitive materials, the AFERA test methods for Pressure Sensitive Adhesive Tapes and the ASTM related methods. Different testing surfaces have been used in function of the application: chromed stainless steel plates (No. 304) ("ss") as recommended by the FINAT and Kraft paper.
- Rolling Ball Tack (RBT) is the distance, expressed in centimeters; a steel ball rolls on the adhesive film with a standard initial velocity (Pressure Sensitive Tape Council Test No. 6; ASTMD3121-73). Small numbers indicate aggressive tack.
- Holding Power (HP) on Kraft is the time required to pull a standard area (2.5 x 1.3 cm) of tape from a Kraft paper under a standard load of 1 kg, in shear at 2° (Pressure Sensitive Tape Council Method No. 7; ASTMD-3654-82). Long times indicate high adhesive strength. Results are expressed in hours (h) or minutes (min). The type of failure mode is expressed as adhesive failure (AF) or cohesive failure (CF). This test is carried out at a temperature of 40°C.
- Flap on Kraft determines the time in minutes for a bond failure of a tape on Kraft paper. The test is carried out with equipment designed by ETS-Holland and mimics the pushing force of the cardboard flaps. Weights of 0.5 and 1 kg are used.
- Glass transition temperatures Tq have been determined by Differential Scanning calorimetry with a temperature sweep of 40 °C/min. The Tg is measured at the onset of the transition.
- Polystyrene content was determined by 1H-NMR.
- Average homopolymer block lengths have been determined by ¹³C NMR using the method described herein before. ¹³C NMR spectra of polymer samples were obtained with a Bruker AMX-500 FT spectrometer operating at 125 MHz. Quantitative proton-decoupled spectra were recorded with a 90° 13C excitation pulse and a repetition rate of 10 s. 10% (w/w)of polymer solutions in CDCl₃ were used. To improve the relaxation time 0.1 mol/l chromium acetylacetonate was added. The applied line broadening was 2 Hz. The spectra were referenced such that the aliphatic carbons of trans-polybutadiene are at 31.9 ppm.
- Quantification of the percentage (%) of aromatic proton in aromatic modified hydrocarbon resin was done by liquid 1H-NMR after dissolving the samples in deuterated chloroform and measuring with a BRUKER DPX-300.
- Ring and Ball softening point is a measure of the temperature at which a resin softens following the ASTM E-28 test method.
- Hot-Melt viscosity and stability: the hot-melt viscosity of adhesives has been determined with a Brookfield Thermocell-programmable DVII+ viscometer. Measurements have been carriedout at 177°C continuously during 24 hours following ASTM D-3236-78.

### Synthesis of the block copolymers (block copolymers B and C and comparative block copolymers B and C)

Cyclohexane, styrene, butadiene and isoprene were purified by activated aluminumoxide and stored at 4 °C under a nitrogen atmosphere. EPON™ 826 (a diglycidyl ether) and dibromoethane (EDB) were used as coupling agent. Prior to synthesis, a monomer mixture of butadiene and isoprene (at a weight/weight ratio given in Table 1) was prepared andstored under nitrogen at 4 °C. This mixture was used as such.

An autoclave, equipped with a helical stirrer was charged with cyclohexane and the content was heated to 50 to 60 °C. As initiator sec-BuLi was dosed immediately followed by styrene monomer, which was allowed to polymerize to completion. The reaction temperature was increased to 70 °C, at which temperature a butadiene/isoprene monomer mixture (B/I) was dosed and reacted. The resulting diblock was coupled with an excess EPON™ 825 or 826 (diglycidyl ethers) or alternatively with an excess of EDB. This excess was optionally scavenged with sec-BuLi and followed by addition of ethanol as terminator. The reaction mixture was cooled to 40 °C, transported to a blending vessel and a stabilization package was added (comprising IRGANOX™ 565 and tris(nonylphenol)phosphite 0.08/0.35 phr as a cyclohexane solution) and stirred at RT. Dry rubber was obtained by steam coagulation finishing, followed by drying in an oven.

The polymers were analyzed by GPC. Table 1 lists the amounts in which the components have been used. The results of the GPC analysis are in Table 2.

### Synthesis of polymer with sequential/reinitiation (block copolymer A and comparative block copolymer A)

Cyclohexane, styrene, butadiene and isoprene have been purified by activated aluminumoxide and were stored at 4° C under a nitrogen atmosphere. Prior to synthesis, a monomer mixture of butadiene and isoprene (at the desired weight/weight ratio) was prepared and stored under nitrogen at 4°C. This mixture was used as such. An autoclave, equipped with a helical stirrer was charged with cyclohexane and the content was heated to 50°C. As initiator sec-BuLi was dosed immediately followed by styrene monomer that was allowed to polymerize to completion. The reaction temperature was increased to 60°C and followed by dosing and reaction to completion of a butadiene/isoprene monomer mixture (B/I). A second portion of sec-BuLi was dosed immediately followed by dosing and reacting to completion of a butadiene/isoprene monomer mixture (B/I). A second portion of styrene monomer was dosed and reacted to completion. The reaction mixture was terminated with a stoichiometric amount of alcohol, cooled to 40°C, transported to a blending vessel and a stabilization package was added and stirred at room temperature. White polymer was obtained by steam coagulation finishing, followed by drying in an oven. Table 1 lists the respective amounts of the applied starting materials. The results of the GPC analysis are in Table 2.

Further components used in the examples are listed in Table 3.

All the formulations in the examples have been compounded in and WERNER and PFLEIDERER LUK 025 Z-blade mixer at a processing temperature of 165°C under nitrogen blanketing to exclude oxygen from air. Samples were used for the hot-melt viscosity tests.

Further, all the formulations in the examples have been prepared out of solvent. The different ingredients were poured in toluene and mixed for 24 hours to obtain the dissolution. Afterward, the solutions have been coated on a Polyester Film (MYLAR -36 microns thick) with an automatic BRAIVE Bar Coater to obtain an adhesive coating weight of 22 g/m² dry. Thereafter, the samples have been laminated with a siliconised paper to protect them. Prior to testing, the samples are stored in a conditioned room at 21 °C and 50% relative humidity.

### Example 1

All the formulation shave been compounded with 100 phr polymer/110 phr WINGTACK™ ET/15 phr EDELEX™ N 956/3 phr of IRGANOX™ 1010. Comparative example D is compounded with KRATON® D-1160.

Results from Table 4 show that polymers A,B and C provide to the composition a remarkable and unexpected low and stable hot-melt viscosity at 177°C with less than 5% variation after 24 hours test period. The other polymers provide to the composition either a significant increase in viscosity or a significant decrease in viscosity.

An increase in viscosity means that the polymer crosslinks and a decrease in viscosity that the polymer undergoes chain scission. In both cases, as well known, these processes affect negatively the adhesive performance like tack, adhesion and cohesion.

### Example 2

Results in Table 5 show that the adhesive performance of the compositions based on the Polymer C from the invention give packaging tape properties similar to those obtained with the comparative composition D but with a more stable hot-melt viscosity as shown in Example 1.

**Table 1**

| Polymer | Comp. A | Comp. B | Polymer A | Polymer C |
|---|---|---|---|---|
| Cyclohexane (I) | 30 | 6 | 30 | 14 |
| Initiator (mmol) | 27 | 12.9 | 26.6 | 27 |
| Styrene 1 (gram) | 327 | 141.8 | 290 | 292 |
| Bd/Ip (gram) | 2410 | | 2285 | |
| Styrene 2 (gram) | 565 | | 530 | |
| Excess EDB (mol%) | | 15 | | |
| EPON™ 825 | | | | 3.3 |
| Methanol (ml) | 5 | | 5 | 1 |
| Ethanol | | 0.9 | | |

**Table 2**

| Polymer | Comp. A | Comp. B | A | B | C | Comp. C |
|---|---|---|---|---|---|---|
| Mw polystyrene *10³ | 12.1 | 11 | 10.9 | 10.6 | 10.6 | 10.9 |
| Total Mw * 10³ | 206 | 195 | 191 | 184 | 183 | 174 |
| Coupling efficiency (%) | 69 | 87 | 68 | 72.6 | 74 | 64.4 |
| Polystyrene content (%) | 19 | 17.6 | 18.9 | 18.8 | 20 | 20 |
| Bd/IP ratio (wt/wt) | 50/50 | 50/50 | 50/50 | 50/50 | 40/60 | 40/60 |
| Coupling | None | EDB | None | EPON ® 826 | EPON ® 826 | EPON® 825 |

Further components used in the tested adhesive compositions have been listed in the below definition list (Table 3).

| | |
|---|---|
| KRATON® D-1160 | a linear styrene-isoprene-styrene block copolymer with 19% polystyrene contenta total molecular weight of 178 000 g/mole and a coupling efficiency of 100%. This polymer is used as comparative D |
| WINGTACK™ 86 | an aliphatic/aromatic hydrocarbon resin with a softening point of 86°C, a NMR-H aromaticity |
| | of 9.6%, a glass transition temperature Tg of 37°C developed by GOODYEAR CHEMICALS |
| QUINTONE™ S-100 | an aliphatic/aromatic hydrocarbon resin with a softening point of 94°C, a NMR-H aromaticity of 6.3%, a glass transition temperature of 49°C developed by ZEON. |
| WINGTACK™ ET | an aliphatic/aromatic hydrocarbon resin with a softening point of 94°C, a NMR-H aromaticity of 4.2 %, a glass transition temperature of 44°C developed by GOODYEAR CHEMICALS. |
| PICCOTAC™ 8095 | an aliphatic/aromatic hydrocarbon resin with a softening point of 93 °C , a NMR-H aromaticity of 5.4% , a glass transition temperature Tg of 36 °C developed by EASTMAN Chemical. |
| EDELEX™ N 956 | a naphtenic oil from DEUTSCHE SHELL AG |
| IRGANOX™ | is an anti-oxidant from CIBA |

**Table 4**

| Properties | Comp A | Comp B | Polymer A | Polymer B | Polymer C | Com pC | Comp D |
|---|---|---|---|---|---|---|---|
| HMV 177 °C | 180 | 115 | 80 | 46 | 73 | 43 | 52 |
| (0 h) Pa.s | | | | | | | |
| HMV 177 °C (6 h) Pa.s | 200 | 127 | 78 | 46 | 72.5 | 42 | 49 |
| HMV 177 °C (24 h) Pa.s | | | 80 | 44 | 73 | 35 | 45 |
| variation | +11% | +10% | 0% | +4.5% | 0% | -23% | -17% |

**Table 5**

| | | | | | | |
|---|---|---|---|---|---|---|
| Ingredients/properties | Units | F-1 | F-2 | F-3 | F-4 | F-5 |
| Comparative D | | 100 | | | | |
| Polymer C | | | 100 | 100 | 100 | 100 |
| Wingtack™ ET | phr | 110 | 110 | | | |
| Quintone™ S-100 | phr | | | 110 | | |
| Piccotac™ 8095 | phr | | | | 110 | |
| Wingtack™ 86 | phr | | | | | 110 |
| Irganox™ 100 | phr | 3 | 3 | 3 | 3 | 3 |
| RBT | cm | 10.5 | 17 | 12 | 9 | 3.9 |
| Flap Kraft 0.5 kg | minutes | 4300 | 7100 | 5400 | 4700 | 2000 |
| Flap Kraft 1 kg | minutes | 560 | 390 | 900 | 730 | 530 |
| Flap kraft -1 kg | minutes | 22 | 90 | 53 | 36 | 59 |
| HMV 177 °C | Pa.s | 52 | 74 | 67 | 66 | 53 |

## Claims

1. Accordingly, a low viscosity, hot-melt stable adhesive composition is provided, comprising:
a) at least one block copolymer, comprising at least two terminal poly(vinyl aromatic) blocks and at least one central block of randomly copolymerized isoprene/butadiene mixtures in an isoprene/butadiene weight ratio of from 40/60 to 60/40, having a poly(vinyl aromatic) content in the range of from 17 to 20 %, a total apparent molecular weight in the range of from 175,000 to 195,000,a content of 1,2-vinyl bonds and/or 3,4 vinyl bonds of at most 15 wt% in the conjugated diene blocks , and a coupling efficiency in the range of from 63-80 %, and occurring in a weight proportion of from 40 to 45 wt%, relative to the weight of the complete composition,
b) an aliphatic/aromatic hydrocarbon tackifying resin, containing less than 16 % by weight of aromatic structure as determined by H-NMR, a differential scanning calorimetry (DSC) glass transition temperature (Tg) between 30 and 55°C, and a Ring and Ball softening point between 85 and 95°C, in a weight proportion of from 45 to 55 wt%, relative to the weight of the complete composition,
c) a plasticizer, in a weight proportion of from 5 to 15 wt%, relative to the weight of the complete composition;
and having a stable hot-melt viscosity of plus or minus 5 % of the starting value after 24 hoursat 177°C and having a hot-melt viscosity of ≤ 80 Pa.s at 177°C.

2. Low viscosity, hot-melt stable adhesive composition according to claim 1, wherein the block copolymer component (a) is a S-(I/B)-S block copolymer, wherein S represents a block of polymerized substantially pure styrene and (I/B) represents a randomly copolymerized isoprene/butadiene block , and wherein the Poly Styrene Content is in the range of from 17 to 20 wt%.

3. Low viscosity, hot-melt stable adhesive composition according to claim 2, wherein the component (a) block copolymer has an a pparent total molecular weight of from 180,000 to 185,000, an isoprene/butadiene weight ratio in the range of from 45/55 to 55/45, and a contenbf 1,2-vinyl bonds and/or 3,4-vinyl bonds of from 5 to 10 wt% in the conjugated diene blocks.

4. Low viscosity, hot-melt stable adhesive composition according to claim 1, wherein the component (b) has an H-NMR aromatic structure in the range of from 4 to 10wt%.

5. Low viscosity, hot-melt stable adhesive compositions according to claim 1, wherein the component (c) is a mineral oil.

6. Adhesive tapes and labels, comprising a composition according to claims 1-5 on a carrier.

7. Packaging tapes, comprising a composition according to claims 1-5 on a carrier.

8. Block copolymers to be used in the low viscosity, hot-melt stable adhesive composition according to claims 1-5, **characterized in that** they comprise at least two terminal poly(vinyl aromatic) blocks and at least one central block of randomly copolymerized isoprene/butadiene mixtures in an isoprene/butadiene weight ratio of from 40/60 to 60/40, having a poly(vinyl aromatic) content in the range of from 17 to 20 %, a total apparent molecular weight inthe range of from 175,000 to 195,000 a content of 1,2-vinyl bonds and/or 3,4 vinyl bonds of at most 15 wt% in the conjugateddiene blocks , and a coupling efficiency in the range of from 63-87 %.

9. Block copolymers according to claim 8, **characterized in that** they have the structure S-(I/B)-S, wherein S represents a block of polymerized substantially pure styrene and (I/B) represents a randomly copolymerized isoprene/butadiene block.

10. Block copolymers according to claims 8 and 9, **characterized in that** they have an apparent total molecular weight of from 180,000 to 185,000, an isoprene/butadiene weight ratio in the range of from 45/55 to 55/45 and a content of 1,2-vinyl bonds and/or 3,4-vinyl bonds of from 5 to 10 wt% in the conjugated diene blocks.
